# EUROPEAN PATENT APPLICATION

(11) **EP 4 597 285 A1**
(43) Date of publication of application: **06.08.2025**
(21) Application number: 23870005.8
(22) Date of filing: 08.08.2023
(51) Int. Cl.: G06F 3/0488

(54) **APPLICATION SWITCHING METHOD, APPARATUS AND DEVICE, AND MEDIUM**

(30) Priority: 28.09.2022 CN 202211193499
(71) Applicant: Alipay (Hangzhou) Information Technology Co., Ltd., Hangzhou, Zhejiang 310000 (CN)
(72) Inventor: XU, Haihao, Hangzhou, Zhejiang 310000 (CN); ZHANG, Linjie, Hangzhou, Zhejiang 310000 (CN)
(74) Representative: Finnegan Europe LLP
(86) International application number: PCT/CN2023/111848
(87) International publication number: WO 2024/066759

(57) **Abstract**

One or more embodiments of this specification disclose application switching methods, apparatuses, and devices, and mediums. This solution includes: obtaining a first touch operation performed by a user on a content display page of a first application; determining whether the first touch operation satisfies a predetermined operation condition; displaying a navigation page in at least a partial area on the content display page if the predetermined operation condition is satisfied, where the navigation page includes at least a first entry icon of an applet of the first application; obtaining a second touch operation performed by the user to select the first entry icon on the navigation page; and switching, based on the second touch operation, to an applet page corresponding to the first entry icon selected by the user.

## Description

### TECHNICAL FIELD

This application relates to the field of computer technologies, and in particular, to application switching methods, apparatuses, and devices, and mediums.

### BACKGROUND

An applet is an application that can be used without the need for downloading and installation. The applet fulfills the dream of making the application "within reach", allowing users to open the application simply by scanning a code or searching for the application.

In an existing technology, when the user probably needs to use multiple applets at the same time, the user needs to close a current applet, return to a page of a main application corresponding to the applet, and then enter another applet through searching, etc. The whole chain includes redundancy, and operation steps are cumbersome and inefficient, which seriously affects product experience of the user.

Therefore, how to reduce operations of the user when the user switches between applets is an urgent technical problem to be resolved.

### SUMMARY

One or more embodiments of this specification provide application switching methods, apparatuses, and devices, and mediums, to resolve a problem of chain redundancy and poor user experience during switching between applets.

To resolve the above-mentioned technical problem, the embodiments of this specification are implemented as follows: An application switching method provided in one or more embodiments of this specification includes: obtaining a first touch operation performed by a user on a content display page of a first application; determining whether the first touch operation satisfies a predetermined operation condition; displaying a navigation page in at least a partial area on the content display page if the predetermined operation condition is satisfied, where the navigation page includes at least a first entry icon of an applet of the first application; obtaining a second touch operation performed by the user to select the first entry icon on the navigation page; and switching, based on the second touch operation, to an applet page corresponding to the first entry icon selected by the user.

An application switching apparatus provided in one or more embodiments of this specification includes: a first acquisition module, configured to obtain a first touch operation performed by a user on a content display page of a first application; a determining module, configured to determine whether the first touch operation satisfies a predetermined operation condition; a display module, configured to display a navigation page in at least a partial area on the content display page if the predetermined operation condition is satisfied, where the navigation page includes at least a first entry icon of an applet of the first application; a second acquisition module, configured to obtain a second touch operation performed by the user to select the first entry icon on the navigation page; and a switching module, configured to switch, based on the second touch operation, to an applet page corresponding to the first entry icon selected by the user.

An application switching device provided in one or more embodiments of this specification includes at least one processor and a memory communicatively connected to the at least one processor. The memory stores instructions that can be executed by the at least one processor, and the instructions are executed by the at least one processor, to enable the at least one processor to perform: obtaining a first touch operation performed by a user on a content display page of a first application; determining whether the first touch operation satisfies a predetermined operation condition; displaying a navigation page in at least a partial area on the content display page if the predetermined operation condition is satisfied, where the navigation page includes at least a first entry icon of an applet of the first application; obtaining a second touch operation performed by the user to select the first entry icon on the navigation page; and switching, based on the second touch operation, to an applet page corresponding to the first entry icon selected by the user.

One or more embodiments of this specification provide a computer-readable medium. The computer-readable medium stores computer-readable instructions, and the computer-readable instructions can be executed by a processor to implement an application switching method.

One or more embodiments of this specification can achieve the following beneficial effects: A first touch operation is obtained from a first application, and a navigation page is displayed in at least a partial area on a content display page when the first touch operation satisfies a predetermined operation condition, where the navigation page includes a first entry icon of an applet of the first application. Therefore, a user can switch to an applet page corresponding to the first entry icon when performing a second touch operation. Because the first entry icon of the applet of the first application is displayed on the content display page of the first application, the first application can be switched to the applet page corresponding to the first entry icon without the need to close the first application, thereby improving user experience.

### BRIEF DESCRIPTION OF DRAWINGS

To describe the technical solutions in the embodiments of this specification more clearly, the following briefly describes the accompanying drawings needed for describing the embodiments. Clearly, the accompanying drawings in the following descriptions merely show some embodiments of this specification, and a person of ordinary skill in the art can still derive other drawings from these accompanying drawings without creative efforts.
FIG. 1 is a schematic diagram illustrating a system architecture of an application switching method, according to one or more embodiments of this specification;
FIG. 2 is a schematic flowchart illustrating an application switching method, according to one or more embodiments of this specification;
FIG. 3 is a flowchart illustrating how to determine a predetermined operation condition of a first touch operation, according to one or more embodiments of this specification;
FIG. 4 is a schematic diagram illustrating a home page of a first application, according to one or more embodiments of this specification;
FIG. 5 is a schematic diagram illustrating a content display page of an applet, according to one or more embodiments of this specification;
FIG. 6 is a schematic diagram illustrating display of a navigation page, according to one or more embodiments of this specification;
FIG. 7 is a schematic diagram illustrating a structure of an application switching apparatus, according to one or more embodiments of this specification; and
FIG. 8 is a schematic diagram illustrating a structure of an application switching device, according to one or more embodiments of this specification.

### DETAILED DESCRIPTION OF EMBODIMENTS

To make the objectives, technical solutions, and advantages of one or more embodiments of this specification clearer, the following clearly and comprehensively describes the technical solutions in the one or more embodiments of this specification with reference to corresponding accompanying drawings and specific embodiments of this specification. Clearly, the described embodiments are merely some but not all of the embodiments of this specification. All other embodiments obtained by a person of ordinary skill in the art based on embodiments of this specification without creative efforts shall fall within the protection scope of one or more embodiments of this specification.

The following describes in detail the technical solutions provided in the embodiments of this specification with reference to the accompanying drawings.

In a related technology, for switching of an applet, a currently used applet needs to be closed before a new applet is opened. The whole chain includes redundancy, and operation steps are cumbersome and inefficient, which seriously affects product experience of the user.

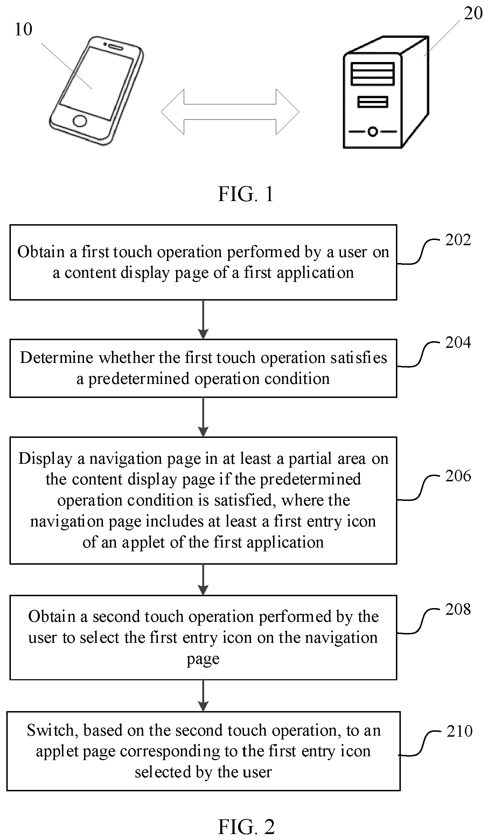

To resolve disadvantages in the related technology, this solution provides the following embodiments. FIG. 1 is a schematic diagram illustrating a system architecture of an application switching method, according to one or more embodiments of this specification. As shown in FIG. 1, this system includes terminal device 10 and server 20. A first application is installed on terminal device 10, and terminal device 10 can be a device such as a mobile phone, a computer, a smart watch, etc. Server 20 can be a server of a first application. Terminal device 10 can communicate with server 20. A user performs a first touch operation on terminal device 10. Server 20 determines whether the first touch operation satisfies a predetermined operation condition, and displays a navigation page on terminal device 10 when the first touch operation satisfies the predetermined operation condition. Server 20 sends a corresponding instruction to the first application of terminal device 10 based on an operation performed by the user on the first application on terminal device 10, and terminal device 10 performs a corresponding operation according to the instruction sent by server 20.

Next, an application switching method provided in one or more embodiments of this specification is specifically described with reference to the accompanying drawings: FIG. 2 is a schematic flowchart illustrating an application switching method, according to one or more embodiments of this specification. From a program perspective, this procedure can be performed by a program installed on an application server or an application client.

As shown in FIG. 2, this procedure can include step 202 to step 210.

Step 202: Obtain a first touch operation performed by a user on a content display page of a first application.

The first application can be an application installed in a terminal, and can be referred to as a main application; or the first application can be an application that is accessed by the user through a search or a shortcut entry in a terminal device application to help the user complete a specific function, for example, an applet or an H5 page, and can be referred to as a sub-application. The content display page of the first application can include a home page of the first application, can include a secondary page or another sub-page of the first application, and can further include a page of an applet. It can be understood that the content display page can be a display page of a main application, or can be a display page of a sub-application.

The first touch operation can be a touch operation such as sliding, tapping, etc. performed by the user on the content display page displayed on the terminal device.

Step 204: Determine whether the first touch operation satisfies a predetermined operation condition.

Step 206: Display a navigation page in at least a partial area on the content display page if the predetermined operation condition is satisfied, where the navigation page includes at least a first entry icon of an applet of the first application.

The predetermined operation condition can represent an operation condition that can wake up the navigation page. The first entry icon can represent an icon of an applet for accessing the first application. In actual application, a home page or a predetermined page of the first application can include icons for accessing applets. For ease of user operation, in one or more embodiments of this specification, an entry icon of an applet included on the navigation page can be the same as an icon of an applet displayed on a page of the first application. It can be understood that a form of an entry icon of each applet on the navigation page can be set according to actual needs. This is not specifically limited herein.

In one or more embodiments of this specification, the navigation page can be displayed in at least a partial area on the content display page when the first touch operation of the user satisfies the predetermined operation condition, and the navigation page can include a first entry icon of at least one applet of the first application.

Step 208: Obtain a second touch operation performed by the user to select the first entry icon on the navigation page. Step 210: Switch, based on the second touch operation, to an applet page corresponding to the first entry icon selected by the user.

The user can select any first entry icon on the navigation page and enter an applet page corresponding to the first entry icon, to switch the applet. The second touch operation can be a tap operation, a voice control operation, etc.

According to the application switching method provided in one or more embodiments of this specification, the first touch operation performed on the content display page of the first application is obtained, and the navigation page is displayed in at least a partial area on the content display page when the first touch operation satisfies the predetermined operation condition, where the navigation page includes the first entry icon of the applet of the first application, and the user can access the applet corresponding to the first entry icon when performing the second touch operation. In one or more embodiments of this specification, the navigation page is displayed on the content display page of the first application, so that the first application is directly switched to the applet corresponding to the first entry icon without the need to close the current application, thereby improving user experience.

It should be understood that in the method described in one or more embodiments of this specification, sequences of some steps in the method can be exchanged with each other based on actual needs, or some steps in the method can be omitted or deleted.

Based on the method in FIG. 2, one or more embodiments of this specification further provide some specific implementations of the method, which are described below.

To further improve use convenience of the user, the navigation page in one or more embodiments of the specification can further include a second entry icon of the first application. The application switching method provided in one or more embodiments of the specification can further include: obtaining a third touch operation performed by the user to select the second entry icon on the navigation page; and switching to an application page of the first application based on the third touch operation.

The second entry icon can represent an icon for entering the application page of the first application, for example, for entering the home page or a specified page of the first application.

When the user triggers the third touch operation, it indicates that the user selects the second entry icon corresponding to the first application, and the user can enter the application page of the first application through the second entry icon. The application page can include the home page or the specified page of the first application.

In actual application, the navigation page can further include a third entry icon of a second application. The second application can include an application other than the first application installed on the terminal.

The navigation page can further include an application icon of a recommended application. After tapping the application icon, the user can enter an application market to download the application. The recommended application can include a predetermined quantity of applications with a high downloading frequency, for example, top-ranked applications in a ranking list in the application market.

To further increase the diversity of a touch operation, the first touch operation can include a sliding operation, and the sliding operation can include sliding in a predetermined direction or sliding based on a predetermined graph. For example, the first touch operation can be sliding from the left side of a display screen of the terminal device to the right side, or can be sliding from the right side of the display screen of the terminal device to the left side, or can be sliding back and forth on the display screen.

In one or more embodiments of this specification, the predetermined operation condition can include an operation condition that represents at least one of an operation direction, an operation distance, or an operation speed. Whether to wake up the navigation page can be determined based on factors such as an operation direction, an operation distance, an operation speed, etc.

Optionally, the determining whether the first touch operation satisfies a predetermined operation condition can specifically include: obtaining an operation direction of the first touch operation; and determining whether an included angle between the operation direction and a predetermined reference direction is less than or equal to a predetermined angle.

In actual application, the main application or the sub-application can monitor a touch event on the screen of the terminal device, and the obtaining a direction of the first touch operation can specifically include: obtaining start coordinates of the first touch operation; obtaining end coordinates of the first touch operation; and determining the operation direction of the first touch operation based on the start coordinates and the end coordinates.

The operation direction of the first touch operation can be determined based on the start coordinates and the end coordinates of the first touch operation. A line segment between the start coordinates and the end coordinates forms a first line segment. The predetermined reference direction can be a direction determined by any two points in a coordinate system corresponding to the screen of the terminal device. For example, the predetermined reference direction can be a direction parallel to any coordinate axis in the coordinate system, for example, can be a direction parallel to an X axis and in a same or opposite direction as the X axis. For another example, the predetermined reference direction can be an edge direction of the terminal device. For example, the predetermined reference direction can be a direction parallel to a shorter side of the display screen of the terminal device. The included angle between the operation direction and the predetermined reference direction can be an angle between the first line segment and the predetermined reference direction.

Before the obtaining end coordinates of the first touch operation, the method can further include: determining whether the start coordinates are coordinates in an edge area of the terminal device; and if yes, obtaining the end coordinates; or if no, terminating a display procedure of the navigation page.

The edge area can be an area within a predetermined range of a display page, and the predetermined range can be a percentage of the display page, or can be an area with a distance from an edge of the display page being a predetermined length. When it is determined that the included angle between the operation direction and the predetermined reference direction is less than or equal to the predetermined angle, it indicates that the predetermined operation condition is satisfied.

In actual application, when the start coordinates are not coordinates in the edge area of the terminal device, the display procedure of the navigation page is terminated, and the operation direction of the first touch operation no longer needs to be determined, thereby improving user experience.

Optionally, the determining whether the first touch operation satisfies a predetermined operation condition can specifically include: obtaining an operation distance of the first touch operation; and determining whether the operation distance falls within a predetermined distance range.

The obtaining an operation distance of the first touch operation can specifically include: obtaining start coordinates of the first touch operation; obtaining end coordinates of the first touch operation; and determining the operation distance of the first touch operation based on the start coordinates and the end coordinates.

In actual application, the operation distance of the first touch operation can be calculated by using a Euclidean distance calculation formula. The predetermined distance range can represent a predetermined length interval, for example, 1 centimeter to 2 centimeters. When the operation distance of the first touch operation falls within the above-mentioned interval, the navigation page is woken up.

In one or more embodiments of this specification, the operation distance of the first touch operation can be alternatively determined when the operation direction of the first touch operation satisfies the predetermined operation condition, to improve user experience. If the operation direction does not satisfy the predetermined operation condition, the operation distance does not need to be determined.

Optionally, the determining whether the first touch operation satisfies a predetermined operation condition can specifically include: obtaining operation duration of the first touch operation; and determining whether the operation duration falls within a predetermined duration range.

The obtaining operation duration of the first touch operation can specifically include: obtaining start time of the first touch operation; obtaining end time of the first touch operation; and determining the operation duration of the first touch operation based on the start time and the end time.

Whether the operation duration falls within the predetermined duration range is determined, and if yes, it indicates that the operation duration satisfies the predetermined operation condition.

In actual application, operation time of the first touch operation can be determined after the operation direction and the operation distance of the first touch operation satisfy a predetermined condition.

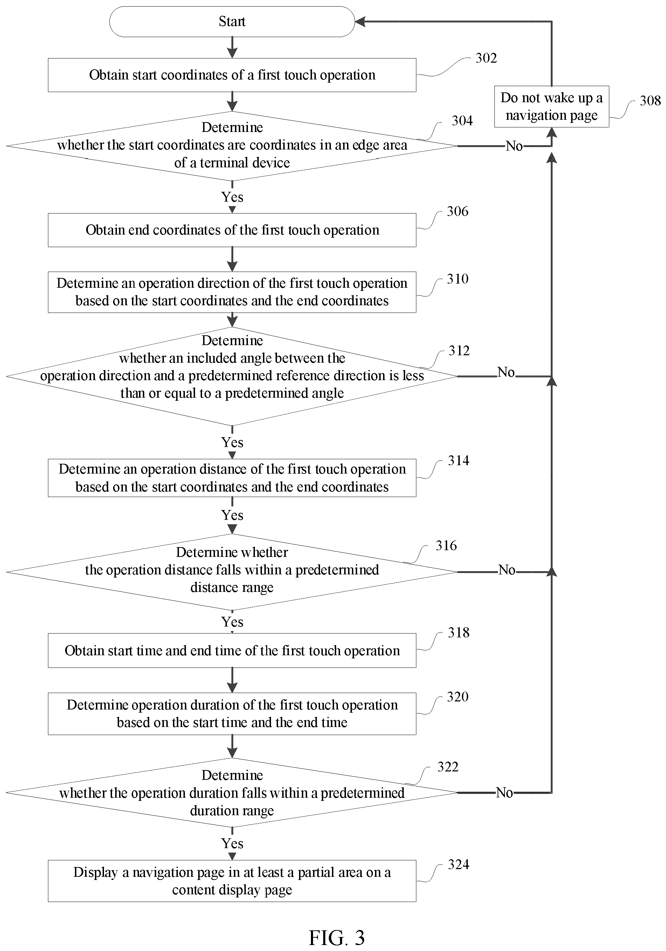

To further describe the predetermined operation condition for the first touch operation in one or more embodiments of this specification, FIG. 3 is a flowchart illustrating how to determine the predetermined operation condition for the first touch operation, according to one or more embodiments of this specification. As shown in FIG. 3, step 302 to step 324 can be included.

Step 302: Obtain start coordinates of the first touch operation.

Step 304: Determine whether the start coordinates are coordinates in an edge area of the terminal device.

Step 306: If yes, obtain end coordinates of the first touch operation.

Step 308: If no, do not wake up the navigation page.

Step 310: Determine an operation direction of the first touch operation based on the start coordinates and the end coordinates.

Step 312: Determine whether an included angle between the operation direction and a predetermined reference direction is less than or equal to a predetermined angle.

Step 314: If yes, determine an operation distance of the first touch operation based on the start coordinates and the end coordinates. If no, step 308 is performed, and the navigation page is not woken up.

Step 316: Determine whether the operation distance falls within a predetermined distance range.

Step 318: Obtain start time and end time of the first touch operation.

Step 320: Determine operation duration of the first touch operation based on the start time and the end time.

Step 322: Determine whether the operation duration falls within a predetermined duration range.

Step 324: If yes, display the navigation page in at least a partial area on the content display page. If no, step 308 is performed, and the navigation page is not woken up.

Whether the operation direction, the operation distance, and the operation duration of the first touch operation satisfy the predetermined operation condition is determined, to determine whether the user needs to display the navigation page, thereby improving the accuracy of display of the navigation page.

To avoid impact exerted by the first touch operation for waking up the navigation page on an existing system operation in a system of the terminal device, the application switching method in one or more embodiments of this specification can further include: disabling, on the content display page of the first application, a system operation that satisfies the predetermined operation condition.

In actual application, the system operation of the terminal device probably includes an operation at a system level that is the same as the predetermined operation condition. In one or more embodiments of this specification, the system operation, on the content display page of the first application, that satisfies the predetermined operation condition can be set to a disabled state, so that when the user performs, on the content display page of the first application, the first touch operation that satisfies the predetermined operation condition, the navigation page can be woken up. For example, in an Android system of the terminal device, a sliding leftward operation is corresponding to returning to a previous-level page, and the sliding leftward operation needs to be disabled on an operation page of an applet, to avoid a case that the user cannot successfully wake up the navigation page when performing the sliding leftward operation, and an operation requirement on the user is also low. This is more conducive to popularization and use and provides convenience for more users.

In one or more embodiments of this specification, the predetermined operation condition can include a predetermined operation direction, and the above-mentioned disabled system operation corresponding to the predetermined operation condition can represent that a system operation corresponding to the predetermined operation direction is disabled.

In actual application, the predetermined operation condition and an operation condition for a system operation performed by the user in system operations of a terminal device on which the first application is installed can be set to different operation conditions. In this way, an original system operation is reserved, and a function of waking up the navigation page for entering an applet can be added while use of the system operation by the user is not affected, and further, user experience can be improved.

Optionally, the predetermined operation condition can include a predetermined operation direction. The application switching method provided in one or more embodiments of this specification can further include: obtaining a system operation instruction of a terminal device on which the first application is installed, where the system operation instruction is used by the user to complete a system operation event on the terminal; determining a system operation event that includes the predetermined operation direction from the system operation instruction; determining a system operation parameter corresponding to the system operation event, where the system operating parameter is used to indicate that the terminal performs a corresponding system operation event when the user performs an operation that satisfies the system operating parameter on the terminal device; and determining the predetermined operation condition based on the system operation parameter, where an operation parameter represented by the predetermined operation condition is different from the system operation parameter.

In one or more embodiments of this specification, the first application can include several applets. The application switching method provided in one or more embodiments of this specification can further include: sorting entry icons of the applets in the first application based on use time and/or use frequency of the applets; and generating the navigation page based on the sorted entry icons, where a predetermined quantity of sorted entry icons are displayed on the navigation page. When the entry icons of the applets in the first application are sorted by using the use time and/or the use frequency of the applets, it is convenient for the user to select and use the applets, thereby improving user experience.

The sorting entry icons of the applets in the first application based on use time and/or use frequency of the applets can specifically include: determining, based on historical program use information of the user, several applets that have been used by the user in a predetermined time period, where the historical program use information is used to indicate a case of the applets that have been used by the user in the predetermined time period.

The entry icons of the several applets are sorted based on use frequency of the user, or can be sorted based on use time of the user. The entry icons can be sorted in a chronological order of the use time, or can be sorted in a descending order of the use frequency. For example, an applet with the most recent use time of the user is placed on a top place on the navigation page. In actual application, integrated sorting can be further performed with reference to use time and use frequency, so that an entry icon of an applet that satisfies user needs to a larger degree can be arranged in a front area.

In actual application, if a relatively large quantity of applets are included in the first application, when not all the applets can be displayed on the current navigation page, more applets can be displayed by using a fourth touch operation performed by the user on the navigation page. The fourth touch operation can be an operation of sliding up and down on the display screen.

Optionally, the navigation page can include a first entry icon of an applet added by the user to favorites.

In actual application, first entry icons can be classified and displayed on the navigation page, for example, recently used applets, commonly used applets, or user-favorite applets.

Optionally, the displaying the navigation page in at least a partial area on the content display page can specifically include: displaying the navigation page as a floating layer on at least a partial area on the content display page in which the user performs the first touch operation.

The navigation page can be displayed on the left side of the content display page of the first application, or can be displayed on the right side of the content display page of the first application. Specifically, a specific side of the content display page on which the navigation page is displayed can be set based on an actual use habit of the user.

Optionally, the navigation page can include an icon display area and a non-icon display area. The icon display area is used to display first entry icons of several applets of the first application. The navigation page is covered on the content display page as a floating layer. Background color of the non-icon display area is transparent or semi-transparent, and the non-icon display area is used to display some page content of the content display page.

In actual application, the non-icon display area can alternatively be in another color, for example, black or gray. The first entry icon can be displayed in the icon display area, and color of the icon display area can be transparent or semi-transparent.

Optionally, the icon display area is located on the right side of the navigation page, and the first entry icons are arranged in a vertical column.

In an implementation, in one or more embodiments of this specification, the navigation page and a content display page on which the user performs the first touch operation can be located on the same display page. The displaying the navigation page in at least a partial area on the content display page can specifically include: moving the content display page by a predetermined distance in a predetermined direction based on the first touch operation, where the predetermined direction is consistent with a direction of the first touch operation; and based on the predetermined distance, displaying the navigation page in a display page of the terminal device corresponding to the predetermined distance.

In actual application, a proportion of the predetermined distance to a length of side of the display page of the terminal device can be a predetermined proportion. For example, the predetermined distance can be 50% of the display page, and the content display page and the navigation page are displayed in parallel on the screen of the terminal device. Alternatively, the predetermined distance is positively correlated with the operation distance of the first touch operation. For example, when the operation distance of the first touch operation is 1 centimeter, the predetermined distance is 1 centimeter; and when the operation distance of the first touch operation is 2 centimeters, the predetermined distance is 2 centimeters.

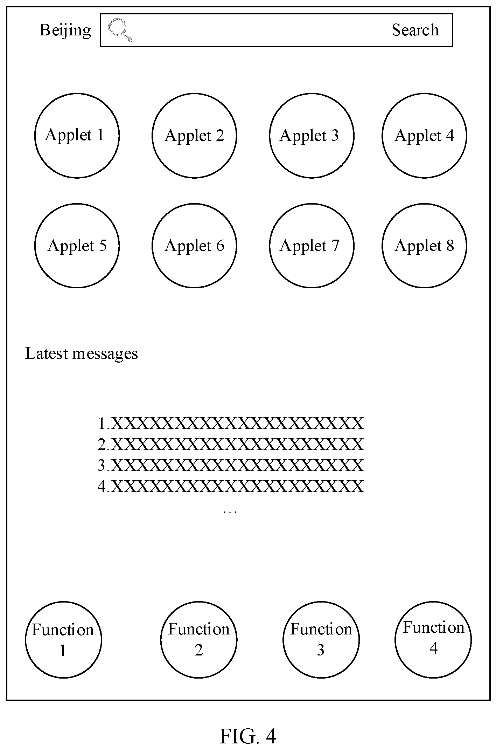

To describe the application switching method provided in one or more embodiments of this specification more clearly, FIG. 4 is a schematic diagram of a home page of a first application, according to one or more embodiments of this specification. As shown in FIG. 4, the home page of the first application includes multiple applets, for example, applet 1 to applet 8. In a related technology, the user needs to enter an applet through the home page of the main application. When the user is using an applet and needs to switch to another applet, the user needs to return to the page of the main application and select the corresponding applet to enter.

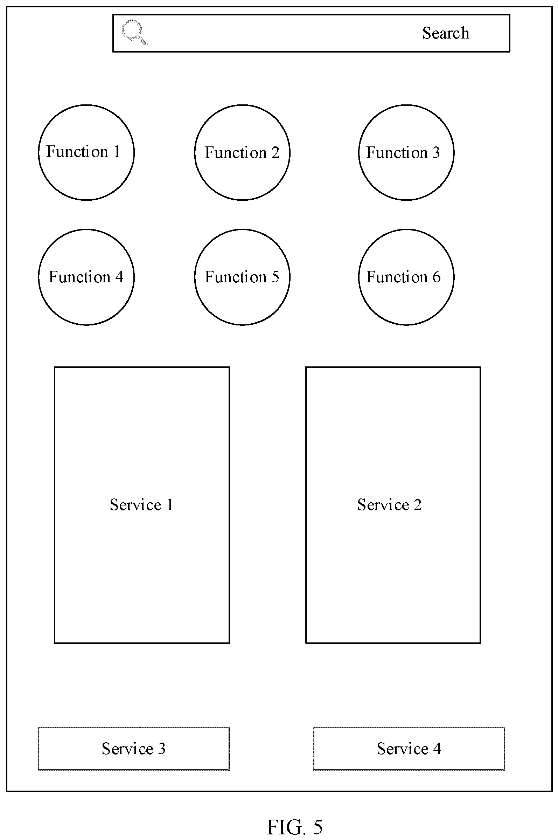

FIG. 5 is a schematic diagram illustrating a content display page of an applet, according to one or more embodiments of this specification. After selecting an applet on the display page of the first application in FIG. 4, the user enters a content display page of the corresponding applet. For example, the user taps an entry icon of applet 1 to enter a content display page corresponding to applet 1.

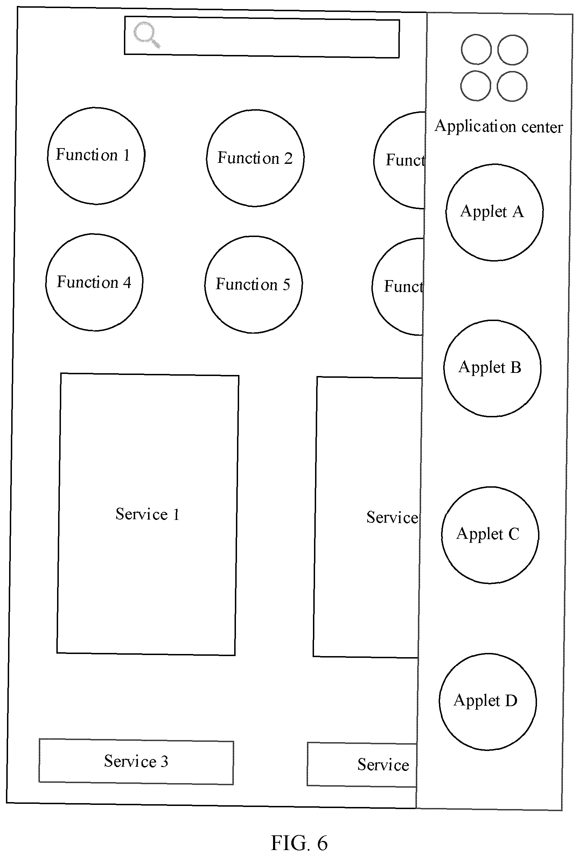

FIG. 6 is a schematic diagram illustrating display of a navigation page, according to one or more embodiments of this specification. As continuation of FIG. 5, as shown in FIG. 6, when the first touch operation initiated by the user on the content display page of the applet satisfies the predetermined operation condition, the user can wake up the navigation page. As shown in FIG. 6, the navigation page can be located on the right side of the display page of the first application, and first entry icons of multiple applets can be vertically arranged on the navigation page. The user can enter, by using a second touch operation, an applet page displayed on the navigation page. The navigation page further includes an entry icon of an application center. When selecting the icon by using the second touch operation, the user can enter the application center to download or select another application.

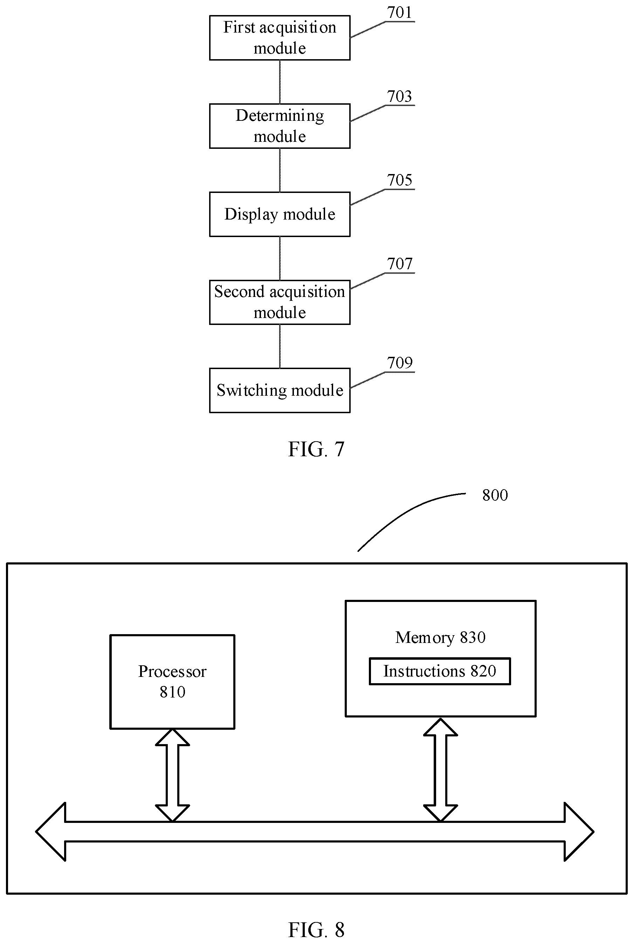

Based on the same idea, one or more embodiments of this specification further provide an apparatus corresponding to the above-mentioned method. FIG. 7 is a schematic diagram illustrating a structure of an application switching apparatus, according to one or more embodiments of this specification. As shown in FIG. 7, the apparatus can include: a first acquisition module 701, configured to obtain a first touch operation performed by a user on a content display page of a first application; a determining module 703, configured to determine whether the first touch operation satisfies a predetermined operation condition; a display module 705, configured to display a navigation page in at least a partial area on the content display page if the predetermined operation condition is satisfied, where the navigation page includes at least a first entry icon of an applet of the first application; a second acquisition module 707, configured to obtain a second touch operation performed by the user to select the first entry icon on the navigation page; and a switching module 709, configured to switch, based on the second touch operation, to an applet page corresponding to the first entry icon selected by the user.

Based on the same idea, one or more embodiments of this specification further provide a device corresponding to the above-mentioned method.

FIG. 8 is a schematic diagram illustrating a structure of an application switching device, according to one or more embodiments of this specification. As shown in FIG. 8, device 800 can include at least one processor 810 and a memory 830 communicatively connected to the at least one processor. The memory 830 stores instructions 820 that can be executed by the at least one processor 810, and the instructions are executed by the at least one processor 810, to enable the at least one processor 810 to perform: obtaining a first touch operation performed by a user on a content display page of a first application; determining whether the first touch operation satisfies a predetermined operation condition; displaying a navigation page in at least a partial area on the content display page if the predetermined operation condition is satisfied, where the navigation page includes at least a first entry icon of an applet of the first application; obtaining a second touch operation performed by the user to select the first entry icon on the navigation page; and switching, based on the second touch operation, to an applet page corresponding to the first entry icon selected by the user.

Based on the same idea, one or more embodiments of this specification further provide a computer-readable medium corresponding to the above-mentioned method. The computer-readable medium stores computer-readable instructions, and the computer-readable instructions can be executed by a processor to implement the above-mentioned application switching method.

The embodiments of this specification are described in a progressive way. For same or similar parts of the embodiments, mutual references can be made to the embodiments. Each embodiment focuses on a difference from other embodiments. Particularly, the device shown in FIG. 8 is briefly described since the device is basically similar to the method embodiments. For related parts, references can be made to related descriptions in the method embodiments.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

The controller can be implemented in any suitable manner. For example, the controller can take the form of a microprocessor, a processor, or a computer-readable medium, a logic gate, a switch, an application specific integrated circuit (ASIC), a programmable logic controller, a programmable logical controller, and an embedded microcontroller that store computer-readable program code (such as software or firmware) executable by the processor or the microprocessor. Examples of the controller include but are not limited to the following microcontrollers: ARC 625D, Atmel AT91SAM, Microchip PIC18F26K20, and Silicone Labs C8051F320. The memory controller can also be implemented as part of control logic of the memory. A person skilled in the art also knows that, in addition to implementing the controller in a pure computer-readable program code manner, a method step can be logically programmed, so that the controller implements a same function in a form of a logic gate, a switch, an application-specific integrated circuit, a programmable logic controller, an embedded microcontroller, etc. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, for example, the computer can be a personal computer, a laptop computer, a cellular phone, a camera phone, a smartphone, a personal digital assistant, a media player, a navigation device, an e-mail device, a game console, a tablet computer, a wearable device, or any combination of these devices.

For ease of description, the above-mentioned apparatus is described by dividing functions into various units. Certainly, when this specification is implemented, functions of the units can be implemented in one or more pieces of software and/or hardware.

Those skilled in the art should understand that the embodiments of this application may be provided as a method, a system, or a computer program product. Therefore, this application can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This application is described based on the flowcharts and/or block diagrams of the method, the device (system), and the computer program product based on the embodiments of this application. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can also be stored in a computer-readable memory that can instruct a computer or another programmable data processing device to work in a specific manner, so that an instruction stored in the computer-readable memory generates a manufacturer including an instruction apparatus, and the instruction apparatus implements a function specified in one or more procedures of a flowchart and/or one or more blocks of a block diagram.

The computer program instructions can alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory can include a non-permanent memory in a computer readable medium, a random access memory (RAM), and/or a non-volatile memory, such as a read-only memory (ROM) or a flash memory (flash RAM). The memory is an example of the computer-readable medium.

The computer-readable medium includes a persistent and a non-persistent, a removable and a non-removable medium, which implement information storage by using any method or technology. The information can be computer-readable instructions, a data structure, a program module, or other data. Examples of the computer storage medium include, but are not limited to, a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette, and a cassette magnetic disk storage, or another magnetic storage device or any other non-transmission medium. The computer storage medium can be configured to store information that can be accessed by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that the embodiments of this specification can be provided as methods, systems, or computer program products. Therefore, this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification can be described in the general context of computer-executable instructions, for example, a program module. Generally, the program module includes a routine, a program, an object, a component, a data structure, etc. executing a specific task or implementing a specific abstract data type. This specification can alternatively be practiced in distributed computing environments. In the distributed computing environments, tasks are executed by remote processing devices connected through a communication network. In the distributed computing environments, the program module can be located in both local and remote computer storage media including storage devices.

The above-mentioned descriptions are merely embodiments of this specification, and are not intended to limit this specification. A person skilled in the art can make various modifications and changes to this specification. Any modification, equivalent replacement, or improvement made without departing from the spirit and principle of this specification shall fall within the scope of the claims in this specification.

## Claims

1. An application switching method, comprising:
obtaining a first touch operation performed by a user on a content display page of a first application;
determining whether the first touch operation satisfies a predetermined operation condition;
displaying a navigation page in at least a partial area on the content display page if the predetermined operation condition is satisfied, wherein the navigation page comprises at least a first entry icon of an applet of the first application;
obtaining a second touch operation performed by the user to select the first entry icon on the navigation page; and
switching, based on the second touch operation, to an applet page corresponding to the first entry icon selected by the user.

2. The method according to claim 1, wherein the navigation page further comprises a second entry icon of the first application, and the method further comprises:
obtaining a third touch operation performed by the user to select the second icon entry on the navigation page; and
switching to an application page of the first application based on the third touch operation.

3. The method according to claim 1, wherein the first touch operation comprises a sliding operation.

4. The method according to claim 1, wherein the predetermined operation condition comprises an operation condition that represents at least one of an operation direction, an operation distance, or an operation speed.

5. The method according to claim 4, wherein the determining whether the first touch operation satisfies a predetermined operation condition specifically comprises:
obtaining an operation direction of the first touch operation; and
determining whether an included angle between the operation direction and a predetermined reference direction is less than or equal to a predetermined angle.

6. The method according to claim 4, wherein the determining whether the first touch operation satisfies a predetermined operation condition specifically comprises:
obtaining an operation distance of the first touch operation; and
determining whether the operation distance falls within a predetermined distance range.

7. The method according to claim 4, wherein the determining whether the first touch operation satisfies a predetermined operation condition specifically comprises:
obtaining operation duration of the first touch operation; and
determining whether the operation duration falls within a predetermined duration range.

8. The method according to claim 1, wherein the method further comprises:
disabling, on the content display page of the first application, a system operation that satisfies the predetermined operation condition.

9. The method according to claim 1, wherein the first application comprises several applets; and
the method further comprises:
sorting entry icons of the applets in the first application based on use time and/or use frequency of the applets; and
generating the navigation page based on the sorted entry icons, wherein a predetermined quantity of sorted entry icons are displayed on the navigation page.

10. The method according to claim 9, wherein the navigation page comprises a first entry icon of an applet added by the user to favorites.

11. The method according to claim 1, wherein the displaying a navigation page in at least a partial area on the content display page comprises:
displaying the navigation page as a floating layer in at least a partial area on the content display page in which the user performs the first touch operation.

12. The method according to claim 11, wherein the navigation page comprises an icon display area and a non-icon display area, and the icon display area is used to display first entry icons of several applets of the first application; and
the navigation page is covered on the content display page as a floating layer, background color of the non-icon display area is transparent or semi-transparent, and the non-icon display area is used to display some page content of the content display page.

13. The method according to claim 12, wherein the icon display area is located on the right side of the navigation page, and the first entry icons are arranged in a vertical column.

14. An application switching apparatus, comprising:
a first acquisition module, configured to obtain a first touch operation performed by a user on a content display page of a first application;
a determining module, configured to determine whether the first touch operation satisfies a predetermined operation condition;
a display module, configured to display a navigation page in at least a partial area on the content display page if the predetermined operation condition is satisfied, wherein the navigation page comprises at least a first entry icon of an applet of the first application;
a second acquisition module, configured to obtain a second touch operation performed by the user to select the first entry icon on the navigation page; and
a switching module, configured to switch, based on the second touch operation, to an applet page corresponding to the first entry icon selected by the user.

15. An application switching device, comprising:
at least one processor; and
a memory communicatively connected to the at least one processor, wherein
the memory stores instructions that can be executed by the at least one processor, and the instructions are executed by the at least one processor to enable the at least one processor to perform:
obtaining a first touch operation performed by a user on a content display page of a first application;
determining whether the first touch operation satisfies a predetermined operation condition;
displaying a navigation page in at least a partial area on the content display page if the predetermined operation condition is satisfied, wherein the navigation page comprises at least a first entry icon of an applet of the first application;
obtaining a second touch operation performed by the user to select the first entry icon on the navigation page; and
switching, based on the second touch operation, to an applet page corresponding to the first entry icon selected by the user.

16. A computer-readable medium storing computer-readable instructions, wherein the computer-readable instructions can be executed by a processor to implement the application switching method according to any one of claims 1 to 13.
